# EUROPÄISCHE PATENTSCHRIFT

(11) **EP 3 662 525 B1**
(45) Veröffentlichungstag und Bekanntmachung des Hinweises auf die Patenterteilung: **08.11.2023**
(21) Anmeldenummer: 18728123.3
(22) Anmeldetag: 29.05.2018
(51) Int. Cl.: H01M 4/139

(54) **VERFAHREN ZUR THERMISCHEN BEHANDLUNG EINES ELEKTRODENFILMS AUF EINEM METALLISCHEN STROMKOLLEKTOR**
METHOD FOR THERMALLY TREATING AN ELECTRODE FILM ON A METAL CURRENT COLLECTOR
PROCÉDÉ DE TRAITEMENT THERMIQUE D'UN FILM D'ÉLECTRODE SUR UN COLLECTEUR DE COURANT MÉTALLIQUE

(30) Priorität: 02.08.2017 DE 102017213384
(43) Veröffentlichungstag der Anmeldung: 10.06.2020
(73) Patentinhaber: VW Kraftwerk GmbH, 38440 Wolfsburg (DE); VARTA Microbattery GmbH, 73479 Ellwangen Jagst (DE)
(72) Erfinder: WROBLEWSKI, Mario, 73434 Aalen (DE); SCHREIBER, Werner, 38527 Meine (DE); HUTH, Andreas, 38159 Vechelde (DE); GAUGLER, Andreas, 73479 Ellwangen (DE)
(74) Vertreter: Ostertag & Partner Patentanwälte mbB
(86) Internationale Anmeldenummer: PCT/EP2018/064028
(87) Internationale Veröffentlichungsnummer: WO 2019/025051

(56) Entgegenhaltungen:
- JP-A- 2003 217 672
- JP-A- 2010 073 559
- JP-A- 2011 082 059
- US-A- 4 680 871
- US-A- 5 050 315
- US-A1- 2009 100 669
- US-A1- 2011 289 790

## Beschreibung

Die Erfindung betrifft ein Verfahren zur thermischen Behandlung eines Elektrodenfilms auf einem metallischen Stromkollektor.

Elektrochemische Zellen umfassen stets eine positive und eine negative Elektrode. Bei der Entladung einer elektrochemischen Zelle findet eine energieliefernde chemische Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom - meist über einen äußeren Verbraucher - zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären elektrochemischen Zellen ist diese Entladereaktion reversibel, es besteht also die Möglichkeit, die bei der Entladung erfolgte Umwandlung chemischer Energie in elektrische umzukehren. Werden in diesem Zusammenhang die Begriffe Anode und Kathode benutzt, benennt man die Elektroden in der Regel entsprechend ihrer Entladefunktion. Die negative Elektrode ist in solchen Zellen also die Anode, die positive Elektrode die Kathode.

Unter den bekannten sekundären elektrochemischen Zellen werden vergleichsweise hohe Energiedichten insbesondere von Lithium-Ionen-Batterien erreicht. Lithium-Ionen-Batterien enthalten in vielen Fällen einen Zellenstapel (stack), der aus mehreren Einzelzellen besteht. Auch Wickelzellen (jelly rolls) kommen häufig zum Einsatz. Bei den Zellen in einer Lithium-Ionen-Batterie handelt es sich meist um einen Verbund aus Elektroden und Separatoren mit der Sequenz "positive Elektrode / Separator / negative Elektrode". Mitunter werden solche Einzelzellen als sogenannte Bizellen mit den möglichen Sequenzen "negative Elektrode / Separator / positive Elektrode / Separator / negative Elektrode" oder "positive Elektrode / Separator / negative Elektrode / Separator / positive Elektrode" hergestellt. Die Elektroden umfassen dabei üblicherweise metallische Stromkollektoren, die meist in Form von Folien, Netzen, Gittern, Schäumen, Vliesen oder Filzen vorliegen. Im Fall der positiven Elektrode werden als Stromkollektoren meist Netze oder Folien aus Aluminium, beispielsweise aus Aluminiumstreckmetall oder aus einer Aluminiumfolie, eingesetzt. Auf der Seite der negativen Elektrode werden als Stromkollektoren meist Netze oder Folien aus Kupfer verwendet.

In der Regel werden die beschriebenen Zellen für Lithium-Ionen-Batterien in einem mehrstufigen Verfahren produziert. Üblich ist, dass in einem ersten Schritt die Elektroden hergestellt werden, die dann anschließend mit einem oder mehreren Separatoren zu den erwähnten Elektroden-Separator-Verbünden kombiniert werden. Elektroden und Separatoren können lose gestapelt oder gewickelt werden oder auch in einem Laminationsschritt miteinander verbunden werden.

Zur Herstellung der Elektroden werden aus meist pastenförmigen Zusammensetzungen, die ein ge**eignetes elektrochemisch aktives Material (kurz "Aktivmaterial") umfassen, auf den Stromkollektoren** dünne Elektrodenfilme gebildet, beispielsweise mittels eines Rakel oder mittels einer Breitschlitzdüse (slot die). Für die Elektroden einer Lithium-Ionen-Batterie geeignete Aktivmaterialien müssen Lithium-Ionen aufnehmen und wieder abgeben können, die beim Laden bzw. Entladen von der negativen zur positiven Elektrode (und umgekehrt) wandern.

Als für negative Elektroden von Lithium-Ionen-Batterien geeignete Aktivmaterialien kommen insbesondere graphitischer Kohlenstoff oder zur Interkalation von Lithium befähigte nicht-graphitische Kohlenstoffmaterialien in Frage. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Insbesondere können die kohlenstoffbasierten Aktivmaterialien mit den metallischen und/oder halbmetallischen Materialien auch kombiniert werden.

Für positive Elektroden eignet sich insbesondere Lithiumkobaltoxid (LCO) mit der Summenformel LiCoO₂, Lithiumnickelmangancobaltoxid (NMC) mit der Summenformel LiNiₓMn_{y}Co_{z}O₂, Lithiummanganspinell (LMO) mit der Summenformel LiMn₂O₄, Lithiumeisenphosphat (LFP) mit der Summenformel LiFePO₄ oder Lithiumnickelcobaltaluminiumoxid mit der Summenformel LiNiₓCo_{y}Al_{z}O₂ (NCA). Auch Mischungen der genannten Materialien können eingesetzt werden.

Neben den Aktivmaterialien enthalten die Zusammensetzungen in der Regel noch einen Elektrodenbinder (kurz **"Binder"**), **einen Leitfähigkeitsverbesserer, ein** Lösungs- und/oder Suspensionsmittel sowie ggf. noch Additive, beispielsweise zur Beeinflussung ihrer Verarbeitungseigenschaften. Ein Elektrodenbinder bildet eine Matrix, in die das Aktivmaterial sowie gegebenenfalls der Leitfähigkeitsverbesserer eingelagert sein können. Die Matrix soll für eine erhöhte strukturelle Stabilität während durch die Lithiierung und Delithiierung verursachten Volumenexpansionen und -kontraktionen sorgen. Als Lösungs- und/oder Suspensionsmittel kommen z.B. Wasser oder organische Lösungsmittel wie N-Methyl-2-Pyrrolidon (NMP) oder N-Ethyl-2-Pyrrolidon (NEP) in Frage. Ein Beispiel für einen wässrig prozessierbaren Binder ist Natrium-Carboxymethylzellulose (Na-CMC). Ein Beispiel für einen in organischen Lösungsmitteln prozessierbaren Binder ist Polyvinylidendifluorid (PVDF). Als Additive können z.B. Rheologiehilfsmittel zugesetzt werden. Bei dem Leitfähigkeitsverbesserer handelt es sich meist um ein elektrisch leitfähiges kohlenstoffbasiertes Material, insbesondere um Leitruß, Leitgraphit, Kohlenstofffasern oder Kohlenstoffröhrchen.

In der Zusammensetzung enthaltenes Lösungs- und/oder Suspensionsmittel findet sich üblicherweise in den auf den Stromkollektoren gebildeten Elektrodenfilmen wieder und muss aus diesen entfernt werden. Die trockenen Elektrodenfilme können dann verdichtet werden, beispielsweise in einem Kalandrierprozess. Die so gebildeten Elektroden können zu den eingangs erwähnten Zellen verbaut werden.

Das Trocknen von auf Stromkollektoren gebildeten Elektrodenfilmen, also das Entfernen des in den Elektrodenfilmen enthaltenen Lösungs- und/oder Suspensionsmittels, ist zeit- und energieaufwendig. In allen der Anmelderin bekannten Produktionsverfahren erfolgt die Trocknung der Elektrodenfilme mittels eines temperierten Gases, insbesondere mittels temperierter Luft. Das Gas erwärmt den Elektrodenfilm und darin enthaltenes Lösungs- und/oder Suspensionsmittel. Die Erwärmung erfolgt dabei zunächst an der Oberfläche des Elektrodenfilms und breitet sich dann graduell ins Innere des Films aus. Entsprechend schreitet auch die Trocknung graduell von außen nach innen fort; eine außenliegende Schicht des Elektrodenfilms kann bereits getrocknet sein, während der Elektrodenfilm in einer an den Stromkollektor angrenzenden Schicht noch erhebliche Mengen an Lösungs- und/oder Suspensionsmittel enthält. Dies kann insoweit problematisch sein, als beim Entfernen des Lösungs- und/oder Suspensionsmittels häufig ein filmartiger Rückstand verbleibt. Wird dieser in einer außenliegenden Schicht des Elektrodenfilms gebildet, so kann dieser eine weitere Trocknung des Elektrodenfilms erheblich verzögern, da Lösungs- und/oder Suspensionsmittel aus der an den Stromkollektor angrenzenden Schicht nicht mehr problemlos austreten kann. Unter Umständen können sich sogar Blasen bilden. Dem versucht man insbesondere durch ausreichend hohe Trocknungszeiten entgegenzuwirken. Bei langsamer Trocknung tritt der beobachtete Trocknungsgradient nur in geringem Umfang auf. Allerdings erhöht die gezielt verlangsamte Trocknung den ohnehin bereits erheblichen für das Entfernen des Lösungs- und/oder Suspensionsmittels anfallenden Zeitaufwand.

Auch induktive Verfahren werden zur Trocknung von Elektrodenfilmen eingesetzt. So ist eine Trocknung von Elektrodenfilmen mittels Induktion aus der JP 2010-73559 A, der JP 2011-82059 A und der US 2011/0289790 A1 bekannt.

Aus der US 2009/0100669 A1 und der JP 2003-217672 A sind gleichfalls induktive Erwärmungen eines Elektrodenfilms bekannt. Im Falle der US 2009/0100669 A1 dienen diese allerdings nicht einer Trocknung. Vielmehr soll die Prozessierbarkeit des Elektrodenfilms verbessert werden. In der JP 2003-217672 A ist eine induktive Erwärmung als Möglichkeit zum Aufschmelzen eines Elektrodenbinders offenbart.

Der vorliegenden Erfindung lag die Aufgabe zugrunde, durch den Einsatz eines induktiven Verfahrens bekannte Verfahren zur Herstellung elektrochemischer Zellen zu verbessern.

Zur Lösung dieser Aufgabe schlägt die Erfindung das Verfahren mit den Merkmalen des Anspruchs 1 vor. Weiterbildungen der Erfindung sind Gegenstand von Unteransprüchen.

Das erfindungsgemäße Verfahren lässt sich gezielt zum Trocknen von Elektrodenfilmen einsetzen, aufgrund einiger weiterer Anwendungsfälle ist es ist jedoch allgemeiner auf eine thermische Behandlung mindestens eines Elektrodenfilms auf einem metallischen Stromkollektor gerichtet. Hierbei sind die Elektrodenfilme erfindungsgemäß Bestandteil einer Zelle umfassend mindestens eine positive und mindestens eine negative Elektrode. Mit anderen Worten: Bevorzugt wird gemäß der vorliegenden Erfindung eine Zelle umfassend mindestens eine positive und mindestens eine negative Elektrode und nicht lediglich ein einzelner Elektrodenfilm thermisch behandelt.

In allen Fällen kommt es gemäß dem erfindungsgemäßen Verfahren zu einer induktiven Erwärmung des mindestens einen Elektrodenfilms.

Induktives Erwärmen elektrisch leitfähiger Körper ist ein bekannter Vorgang, bei dem Metalle durch in ihnen erzeugte Wirbelstromverluste bei in der Regel hohem Wirkungsgrad geheizt werden. Vorliegend wird der metallische Stromkollektor durch in ihm erzeugte Wirbelströme erwärmt. Der erwärmte Stromkollektor erhitzt dann wiederum den mindestens einen Elektrodenfilm samt gegebenenfalls enthaltenem Lösungs- und/oder Suspensionsmittel. Das Lösungs- und/oder Suspensionsmittel wird in der Folge aus dem Elektrodenfilm ausgetrieben.

Wie eingangs ausgeführt, werden beim Trocknen von Elektrodenfilmen mit Hilfe eines temperierten Gases die Elektrodenfilme von außen erwärmt, so dass sich ein nach innen gerichteter Trocknungsgradient bildet. Gemäß dem vorliegend beschriebenen Verfahren erfolgt dagegen eine Erwärmung von innen. Der induktiv erwärmte Stromkollektor überträgt Wärme auf den auf ihm befindlichen Elektrodenfilm. In diesem enthaltenes Lösungs- und/oder Suspensionsmittel wird in der Folge ausgetrieben.

Bei dem metallischen Stromkollektor handelt es sich bevorzugt um eine Metallfolie, ein Metallnetz, ein Metallgitter oder einen Metallschaum. Alternativ kann als Stromkollektor aber auch ein aus Metallfäden oder Metallfilamenten aufgebautes Substrat, insbesondere um einen Filz, ein Vlies oder ein Gewebe, zum Einsatz kommen.

Besonders bevorzugt besteht der metallische Stromkollektor aus Kupfer, Nickel, Aluminium, einer Legierung eines dieser Metalle oder aus Stahl, insbesondere aus Edelstahl.

Der Elektrodenfilm unterscheidet sich bevorzugt nicht von aus dem Stand der Technik bekannten Elektrodenfilmen. Er umfasst in der Regel ein Elektrodenaktivmaterial sowie gegebenenfalls weitere Komponenten wie einen Elektrodenbinder und einen Leitfähigkeitsverbesserer. Bevorzugt handelt es sich bei dem Elektrodenaktivmaterial um ein für positive oder für negative Elektroden von Lithium-Ionen-Batterien geeignetes Aktivmaterial.

Bevorzugt wird als metallischer Stromkollektor ein rechteckiger oder bandförmiger Stromkollektor verwendet. Bei Verwendung eines rechteckigen Stromkollektors ist in der Regel auch der darauf angeordnete mindestens eine Elektrodenfilm rechteckig ausgebildet. Bei Verwendung eines bandförmigen Stromkollektors ist in der Regel auch der darauf angeordnete mindestens eine Elektrodenfilm bandförmig ausgebildet.

Abhängig vom verwendeten Elektrodenaktivmaterial wird ein Stromkollektor für eine positive und/oder eine negative Elektrode verwendet. Handelt es sich bei dem Elektrodenaktivmaterial beispielsweise um ein Aktivmaterial einer positiven Elektrode einer Lithium-Ionen-Zelle, so besteht der Stromkollektor bevorzugt aus Aluminium oder aus einer Aluminiumlegierung.

Im Rahmen des erfindungsgemäßen Verfahrens kann der Stromkollektor mitsamt dem mindestens einen Elektrodenfilm, der Bestandteil der Zelle umfassend die mindestens eine positive und die mindestens eine negative Elektrode ist, durch einen Wirkbereich mindestens einer Induktionseinrichtung geführt werden. Ein hierfür geeignetes Transportmittel wären beispielsweise Transportrollen.

Es ist bevorzugt, dass der Stromkollektor im Rahmen des Verfahrens auf eine Temperatur im Bereich von 30 °C bis 350 °C erwärmt wird.

Als Induktionseinrichtung eignen sich grundsätzlich alle Einrichtungen, die dazu geeignet sind, ein elektrisches Wechselfeld zu erzeugen, das in einem metallischen Gegenstand einen Wirbelstrom induzieren kann. Bevorzugt handelt es sich bei den Induktionseinrichtungen um Spulen, insbesondere um Spulen umfassend jeweils mehrere Spulenwindungen, oder aber die Induktionseinrichtungen umfassen jeweils mindestens eine solcher Spulen.

Gegebenenfalls kann es vorteilhaft sein, die Spule aus unterschiedlichen Materialien zu fertigen. Gerade Abschnitte der Spule können beispielsweise aus Kupfer gefertigt sein, ungerade Abschnitte (Bögen) aus Aluminium. Einzelne Spulenwindungen können hierbei über ihre Länge einen konstanten oder variablen Querschnitt aufweisen.

Wie im eingangs genannten Stand der Technik beschrieben, lässt sich eine Erwärmung von Stromkollektoren mittels Induktion hervorragend im Rahmen eines Herstellungsverfahrens für Elektroden einsetzen. Hierbei wird zur Bildung des mindestens einen Elektrodenfilms in der Regel eine lösungsmittel- und/oder suspensionsmittelhaltige Paste durchgehend oder intermittierend auf den bandförmigen Stromkollektor aufgebracht. Das Lösungsmittel und/oder das Suspensionsmittel aus der Paste werden dann bei der thermischen Behandlung entfernt, soweit es zum Zeitpunkt der thermischen Behandlung in dem Elektrodenfilm noch enthalten ist.

Dabei kann das Entfernen des Lösungsmittels und/oder des Suspensionsmittels durch Kontaktieren des mindestens einen Elektrodenfilms mit einem erwärmten Gasstrom, insbesondere mit einem erwärmten Luftstrom, unterstützt werden. Bevorzugt ist der Gasstrom auf eine Temperatur im Bereich von 20 bis 250 °C, bevorzugt auf eine Temperatur im Bereich von 50 bis 250 °C erwärmt.

Aus dem Elektrodenfilm ausgetriebenes Lösungsmittel und/oder Suspensionsmittel kann mit dem Gasstrom abgeführt werden.

Das Lösungsmittel und/oder das Suspensionsmittel können mittels einer Kondensationseinrichtung kondensiert werden, insbesondere durch Kondensation aus dem Gasstrom abgetrennt werden. Hierzu kann die mindestens eine Kondensationseinrichtung im Strömungsweg des Gasstroms positioniert werden.

Induktionseinrichtungen und deren Spulen erwärmen sich im Betrieb selbst nicht. Es ist daher grundsätzlich möglich, das Lösungsmittel und/oder das Suspensionsmittel an der mindestens einen Induktionseinrichtung, insbesondere an einer Spule der mindestens einen Induktionseinrichtung, zu kondensieren. Zur Förderung der Kondensation kann es bevorzugt sein, diese Spule zu kühlen.

Die Spule oder einzelne ihrer Windungen können massiv oder hohl sein. Weiterhin können die Spule oder die Spulenwindungen mindestens einen gekühlten Bereich oder Abschnitt und mindestens einen erwärmten Bereich oder Abschnitt aufweisen. Eine Kühlung bestimmter Abschnitte der Spule oder der Spulenwindungen kann zweckmäßig sein, um eine gezielte Kondensation im Bereich der gekühlten Abschnitte herbeizuführen. Eine Erwärmung bestimmter Abschnitte der Spulenwindungen kann zweckmäßig sein, um eine gezielte Kondensation im Bereich der erwärmten Abschnitte zu vermeiden.

Das erfindungsgemäße Verfahren kann grundsätzlich nicht nur zur Entfernung von Lösungsmittel und/oder Suspensionsmittel aus den Elektrodenfilmen von Zellen dienen. Es kann auch bevorzugt sein, die thermische Behandlung des mindestens einen Elektrodenfilms durchzuführen unmittelbar bevor der mindestens eine Elektrodenfilm mechanischen Belastungen ausgesetzt wird, insbesondere bevor er einem Kalandrierprozess unterzogen wird oder bevor er gewickelt wird. Die Erwärmung vermag die Flexibilität und die plastische Verformbarkeit des Elektrodenfilms in begrenztem Umfang zu beeinflussen. Durch die Erwärmung kann man beispielsweise das Risiko senken, dass der mindestens eine Elektrodenfilm sich bei einem Wickelvorgang von dem metallischen Stromableiter ablöst.

In einer besonders bevorzugten Ausführungsform ist der mindestens eine thermisch zu behandelnde Elektrodenfilm Bestandteil einer einer Wickelzelle oder einer Stapelzelle.

Die Zelle, die den thermisch zu behandelnden Elektrodenfilm umfasst, umfasst bevorzugt die Sequenz positive Elektrode / Separator / negative Elektrode. Als Bestandteil einer Zelle ist der thermisch zu behandelnde mindestens eine Elektrodenfilm in der Regel bereits kalandriert. Des Weiteren weist er in der Regel auch keine hohen Anteile an Lösungsmittel und/oder Suspensionsmittel mehr auf. Ungeachtet dessen kann es zweckmäßig sein, auch fertige Zellen gemäß dem erfindungsgemäßen Verfahren zu behandeln um Feuchtigkeit aus dem Elektrodenfilm auszutreiben, die bei einer Lagerung der Zelle in den mindestens einen Elektrodenfilm eingedrungen ist.

Es ist möglich, sowohl Zellen ohne Gehäuse oder Zellen in einem offenen Gehäuse als auch in einem Gehäuse befindliche Zellen gemäß der Erfindung zu behandeln. In diesen Fällen ist es grundsätzlich möglich, dass eine oder mehrere Komponenten des Gehäuses zum induktiven Erwärmen eingesetzt werden. Beispielsweise kann ein Gehäuseteil als Bestandteil der Induktionseinrichtungfugieren.

In einer bevorzugten Ausführungsform des Verfahrens ist der thermisch zu behandelnde Elektrodenfilm Bestandteil einer in einem verschlossenen und mit Elektrolyt befülltem Gehäuse angeordneten Zelle. In diesem Fall dient das Verfahren nicht der Trocknung von Elektrodenfilmen. Vielmehr kann durch die Erwärmung des Stromkollektors die Verteilung von Elektrolyt innerhalb der Zelle und innerhalb des Gehäuses beschleunigt werden.

Eine zur Durchführung des erfindungsgemäßen Verfahrens geeignete Vorrichtung zeichnet sich durch die folgenden Merkmale aus:
- Die Vorrichtung umfasst mindestens eine Induktionseinrichtung.
- Die Vorrichtung umfasst Transportmittel um den Elektrodenfilm einschließlich des Stromkollektors durch den Wirkbereich der mindestens einen Induktionseinrichtungzu führen.

Geeignete Induktionseinrichtungen und Transportmittel fanden bereits bei der Beschreibung des erfindungsgemäßen Verfahrens Erwähnung. Auf die entsprechenden Textstellen wird hiermit verwiesen.

Besonders bevorzugt umfasst die Vorrichtung mindestens eine Kondensationseinrichtung zum Kondensieren von aus dem Elektrodenfilm austretendem Lösungsmittel und/oder Suspensionsmittel.

Wie bereits aus den Erläuterungen zum erfindungsgemäßen Verfahren hervorgeht, kann insbesondere auch eine Spule der mindestens einen Induktionseinrichtung als Kondensationseinrichtung dienen. In diesem Fall ist die Spule bevorzugt mit mindestens einer Temperiermittelquelle derart gekoppelt, dass sie mit Temperiermittel aus der mindestens einen Temperiermittelquelle gekühlt werden kann.

Alternativ oder zusätzlich kann die Spule mit mindestens einer weiteren Temperiermittelquelle derart gekoppelt sein, dass sie mit Temperiermittel aus der mindestens einen weiteren Temperiermittelquelle erwärmt werden kann.

Besonders bevorzugt umfasst die Spule innenliegende Kanäle, die von Temperiermittel aus der Temperiermittelquelle durchflossen werden können.

In weiteren bevorzugten Ausführungsformen kann die Vorrichtung mindestens eine Kondensatsammeleinrichtung zum Sammeln von Kondensat, das sich in oder an der Kondensationseinrichtung, insbesondere an einer Oberfläche der mindestens einen Spule, bildet. Bei der Kondensatsammeleinrichtung kann es sich beispielsweise um einen Kondensatsammelkanal handeln, in den an der Spule kondensierte Flüssigkeit abtropfen kann. Diese Kondensatsammeleinrichtung umfasst bevorzugt ein nicht induktiv erwärmbares Material oder besteht in bevorzugten Ausführungsformen aus einem solchen.

Wenn eine Spule der mindestens einen Induktionseinrichtung als Kondensationseinrichtung dient, so kann begleitend vorgesehen sein, dass die Spule eine Formgebung aufweist, die es begünstig, dass an der Spule gebildetes Kondensat in die Kondensatsammeleinrichtung tropft. Beispielsweise kann die Spule einen Bereich oder Abschnitt aufweisen, in dem ihre Unterseite als spitz zulaufende Kante ausgebildetes ist, unter der der Kondensatsammelkanal angeordnet ist.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen, jeweils schematisch:
Figur 1 eine Illustration (Draufsicht schräg von vorne) einer einfachen Ausführungsform einer zur induktiven Erwärmung von Elektrodenfilmen geeigneten Vorrichtung und
Figur2 eine Illustration (Querschnittsdarstellung) einer weiteren einfachen Ausführungsform einer zur induktiven Erwärmung von Elektrodenfilmen geeigneten Vorrichtung.

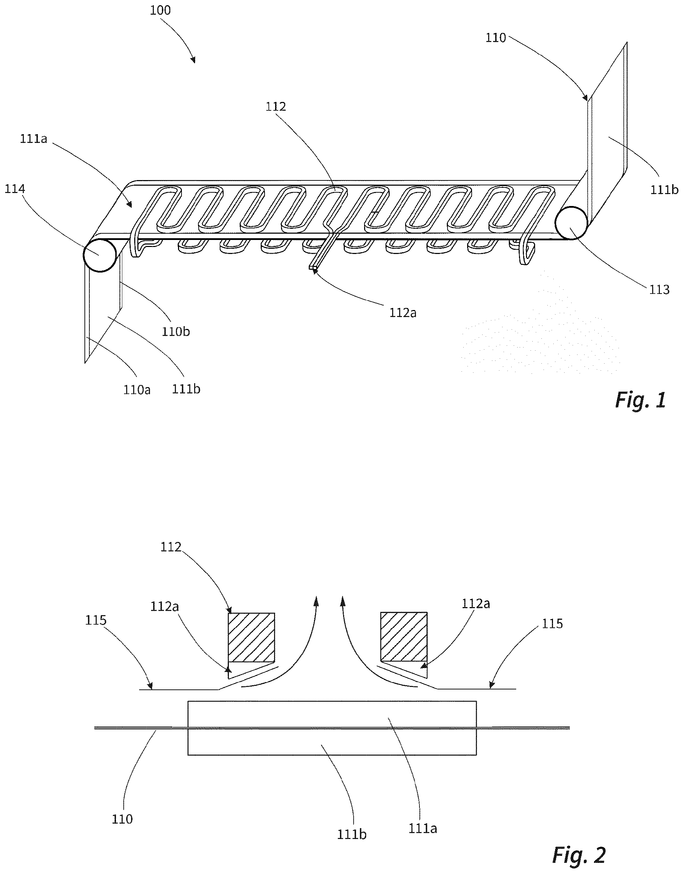

Die in Figur 1 dargestellte Vorrichtung 100 umfasst die Induktionseinrichtung 112, die über den Anschluss 112a ans Stromnetz angeschlossen werden kann. Mittels der Induktionseinrichtung 112 kann der bandförmige metallische Stromkollektor 110 erwärmt werden. Auf dessen Vorderseite ist ein erster Elektrodenfilm 111a aufgebracht, auf dessen Rückseite ein zweiter Elektrodenfilm 111b. Die Längsränder 110a und 110b des Stromkollektors 110 sind unbeschichtet.

Als Transportmittel umfasst die Vorrichtung 100 die Transportrollen 113 und 114, mittels denen der Stromkollektor 110 samt der auf ihn aufgebrachten Elektrodenfilme 111a und 111b durch den Wirkbereich der Induktionseinrichtung geführt werden kann. Dort wird der Stromkollektor 110 induktiv erwärmt und überträgt die Wärme auf die Elektrodenfilme 111a und 111b.

Figur 2 illustriert eine Ausführungsform, bei der das Entfernen von Lösungsmittel und/oder Suspensionsmittel aus zwei Elektrodenfilmen 111a und 111b durch Kontaktieren der Elektrodenfilme 111a und 111b mit einem erwärmten Gasstrom unterstützt wird. Im Gasstrom enthaltenes Lösung- und/oder Suspensionsmittel kann mit Hilfe der gegebenenfalls gekühlten Induktionseinrichtung 112 kondensiert werden. Der Strömungsverlauf des Gasstroms ist durch Pfeile angezeigt. Das kondensierte Lösung- und/oder Suspensionsmittel kann über die in einer spitzen Kante mündenden Unterseite 112a der Induktionseinrichtung 112 in die aus einem elektrisch nicht leitenden Material bestehende Kondensatsammeleinrichtung 115 abtropfen.

## Patentansprüche

1. Verfahren zur thermischen Behandlung mindestens eines Elektrodenfilms (111a; 111b) auf einem metallischen Stromkollektor (110), **gekennzeichnet durch** die folgenden Schritte
a. Der Stromkollektor (110) wird induktiv erwärmt und
b. als der mindestens eine thermisch zu behandelnde Elektrodenfilm wird ein Elektrodenfilm gewählt, der Bestandteil einer Zelle umfassend mindestens eine positive und mindestens eine negative Elektrode ist.

2. Verfahren nach Anspruch 1 mit den folgenden zusätzlichen Merkmalen:
a. Als metallischer Stromkollektor (110) wird ein rechteckiger oder bandförmiger Stromkollektor verwendet.
b. Als metallischer Stromkollektor (110) wird ein Stromkollektor einer positiven und/oder einer negativen Elektrode verwendet.
c. Der Stromkollektor (110) wird durch den Wirkbereich mindestens einer Induktionseinrichtung geführt (112).

3. Verfahren nach Anspruch 1 oder Anspruch 2 mit den folgenden zusätzlichen Merkmalen:
a. Zur Bildung des mindestens einen Elektrodenfilms (111a; 111b) wird eine lösungsmittelund/oder suspensionsmittelhaltige Paste durchgehend oder intermittierend auf den bandförmigen Stromkollektor (110) aufgebracht.
b. Das Lösungsmittel und/oder das Suspensionsmittel werden bei der thermischen Behandlung entfernt.

4. Verfahren nach Anspruch 3 mit dem folgenden zusätzlichen Merkmal:
a. Das Entfernen des Lösungsmittels und/oder des Suspensionsmittels wird durch Kontaktieren des mindestens einen Elektrodenfilms (111a; 111b) mit einem erwärmten Gasstrom unterstützt.

5. Verfahren nach Anspruch 4 mit mindestens einem der folgenden zusätzlichen Merkmale:
a. Entferntes Lösungsmittel und/oder Suspensionsmittel werden mittels einer Kondensationseinrichtung aus dem Gasstrom abgetrennt.
b. Die mindestens eine Kondensationseinrichtung wird im Strömungsweg des Gasstroms positioniert.
c. Das Lösungsmittel und/oder das Suspensionsmittel werden an der Induktionseinrichtung (112), insbesondere an einer Spule der mindestens einen Induktionseinrichtung (112), kondensiert.
d. Die Spule der mindestens einen Induktionseinrichtung (112) wird zur Förderung der Kondensation gekühlt.

6. Verfahren nach einem der vorhergehenden Ansprüche mit dem folgenden zusätzlichen Merkmal:
a. Der mindestens eine Elektrodenfilm (111a; 111b) wird unmittelbar nach der thermische Behandlung einer mechanischen Belastung, insbesondere einem Kalandrierprozess, ausgesetzt.

7. Verfahren nach Anspruch 1 mit dem folgenden zusätzlichen Merkmal:
a. Der thermisch zu behandelnde Elektrodenfilm ist Bestandteil einer in einem verschlossenen und mit Elektrolyt befülltem Gehäuse angeordneten Zelle.

8. Verfahren nach Anspruch 1 mit dem folgenden zusätzlichen Merkmal:
a. Die Zelle umfasst bei der thermischen Behandlung ein offenes Gehäuse.

9. Verfahren nach Anspruch 1 mit dem folgenden zusätzlichen Merkmal:
a. Die Zelle umfasst bei der thermischen Behandlung kein Gehäuse.

10. Verfahren nach Anspruch 1 mit dem folgenden zusätzlichen Merkmal:
a. Die Zelle umfasst bei der thermischen Behandlung ein Gehäuse und eine oder mehrere Komponenten des Gehäuses werden zum induktiven Erwärmen eingesetzt.

## Claims

1. Method for thermally treating at least one electrode film (111a; 111b) on a metal current collector (110), **characterized by** the following steps
a. the current collector (110) is inductively heated and
b. an electrode film which is part of a cell comprising at least one positive electrode and at least one negative electrode is chosen as the at least one electrode film to be thermally treated.

2. Method according to Claim 1 with the following additional features:
a. a rectangular or strip-shaped current collector is used as the metal current collector (110)
b. a current collector of a positive electrode and/or of a negative electrode is used as the metal current collector (110)
c. the current collector (110) is guided through the active region of at least one induction device (112) .

3. Method according to Claim 1 or Claim 2 with the following additional features:
a. to form the at least one electrode film (111a; 111b), a paste containing solvent and/or suspension medium is applied continuously or intermittently to the strip-shaped current collector (110)
b. the solvent and/or the suspension medium is/are removed during the thermal treatment.

4. Method according to Claim 3 with the following additional feature:
a. removing the solvent and/or the suspension medium is assisted by contacting the at least one electrode film (111a; 111b) with a heated gas flow.

5. Method according to Claim 4 with at least one of the following additional features:
a. removed solvent and/or suspension medium is/are separated from the gas flow by means of a condensation device
b. the at least one condensation device is positioned in the flow path of the gas flow
c. the solvent and/or the suspension medium is/are condensed at the induction device (112), in particular at a coil of the at least one induction device (112)
d. the coil of the at least one induction device (112) is cooled in order to promote the condensation.

6. Method according to one of the preceding claims with the following additional feature:
a. the at least one electrode film (111a; 111b) is subjected to mechanical loading, in particular a calendering process, directly after the thermal treatment.

7. Method according to Claim 1 with the following additional feature:
a. the electrode film to be thermally treated is part of a cell arranged in a closed housing filled with electrolyte.

8. Method according to Claim 1 with the following additional feature:
a. in the thermal treatment, the cell comprises an open housing.

9. Method according to Claim 1 with the following additional feature:
a. in the thermal treatment, the cell comprises no housing.

10. Method according to Claim 1 with the following additional feature:
a. in the thermal treatment, the cell comprises a housing and one or more components of the housing are used for the inductive heating.

## Revendications

1. Procédé de traitement thermique d'au moins un film d'électrode (111a ; 111b) sur un collecteur de courant métallique (110), **caractérisé par** les étapes suivantes
a. le collecteur de courant (110) est chauffé par induction et
b. un film d'électrode, qui fait partie d'une cellule comprenant au moins une électrode positive et au moins une électrode négative, est sélectionné comme au moins un film d'électrode à traiter thermiquement.

2. Procédé selon la revendication 1 présentant les caractéristiques supplémentaires suivantes :
a. un collecteur de courant rectangulaire ou en forme de bande est utilisé comme collecteur de courant métallique (110),
b. un collecteur de courant d'une électrode positive et/ou d'une électrode négative est utilisé comme collecteur de courant métallique (110),
c. le collecteur de courant (110) est guidé à travers la zone d'action d'au moins un dispositif à induction (112) .

3. Procédé selon la revendication 1 ou la revendication 2 présentant les caractéristiques supplémentaires suivantes :
a. une pâte contenant un solvant et/ou un agent de suspension est appliquée de manière continue ou intermittente sur le collecteur de courant (110) en forme de bande afin de former l'au moins un film d'électrode (111a ; 111b),
b. le solvant et/ou l'agent de suspension sont éliminés lors du traitement thermique.

4. Procédé selon la revendication 3 présentant la caractéristique supplémentaire suivante :
a. l'élimination du solvant et/ou de l'agent de suspension est facilitée par la mise en contact de l'au moins un film d'électrode (111a ; 111b) avec un flux de gaz chauffé.

5. Procédé selon la revendication 4 présentant au moins une des caractéristiques supplémentaires suivantes :
a. le solvant et/ou l'agent de suspension qui ont été éliminés sont séparés du flux de gaz à l'aide d'un dispositif de condensation,
b. l'au moins un dispositif de condensation est positionné dans le trajet d'écoulement du flux de gaz,
c. le solvant et/ou l'agent de suspension sont condensés sur le dispositif à induction (112), en particulier sur une bobine de l'au moins un dispositif à induction (112),
d. la bobine de l'au moins un dispositif à induction (112) est refroidie pour favoriser la condensation.

6. Procédé selon l'une des revendications précédentes présentant la caractéristique supplémentaire suivante :
a. l'au moins un film d'électrode (111a ; 111b) est soumis à une contrainte mécanique, en particulier à un processus de calandrage, immédiatement après le traitement thermique.

7. Procédé selon la revendication 1 présentant la caractéristique supplémentaire suivante :
a. le film d'électrode à traiter thermiquement fait partie d'une cellule disposée dans un boîtier fermé rempli d'électrolyte.

8. Procédé selon la revendication 1 présentant la caractéristique supplémentaire suivante :
a. lors du traitement thermique, la cellule comprend un boîtier ouvert.

9. Procédé selon la revendication 1 présentant la caractéristique supplémentaire suivante :
a. lors du traitement thermique, la cellule ne comprend pas de boîtier.

10. Procédé selon la revendication 1 présentant la caractéristique supplémentaire suivante :
a. lors du traitement thermique, la cellule comprend un boîtier et un ou plusieurs composants du boîtier sont utilisés pour le chauffage par induction.
